# EUROPEAN PATENT APPLICATION

(11) **EP 3 141 974 A1**
(43) Date of publication of application: **15.03.2017**
(21) Application number: 15789032.8
(22) Date of filing: 15.01.2015
(51) Int. Cl.: G05B 23/02

(54) **PERSONAL VEHICLE DIAGNOSIS SYSTEM AND METHOD BASED ON MOBILE INTELLIGENT TERMINAL**

(30) Priority: 08.05.2014 CN 201410193825
(71) Applicant: Launch Tech Company Limited, Shenzhen, Guangdong 518000 (CN)
(72) Inventor: LIU, Jun, Shenzhen Guangdong 518000 (CN); FENG, Xiangjun, Shenzhen Guangdong 518000 (CN)
(74) Representative: MERH-IP Matias Erny Reichl Hoffmann Patentanwälte PartG mbB
(86) International application number: PCT/CN2015/070759
(87) International publication number: WO 2015/169110

(57) **Abstract**

The present invention provides an personal vehicle diagnosis system and method based on a mobile intelligent terminal. The system includes a mobile intelligent terminal (1), a diagnostic connector (2) communicating with the mobile intelligent terminal, and a backstage server (3) communicating with the mobile intelligent terminal (1). The mobile intelligent terminal (1) has a wireless communication function, a network function, and a display function, and has a client software (13) and a car diagnostic application software (15) installed therein. The mobile intelligent terminal (1) is connected to the diagnostic connector (2) via a wireless communication manner. The mobile intelligent terminal (1) communicates with the backstage server (3) via its network function, to realize update and upgrade of the client software (13) and the car diagnostic application software (15). The diagnostic connector (2) is connected to a car diagnostic seat (5), to achieve the communication between the diagnostic connector (2) and a car ECU (7).

## Description

### CROSS REFERENCE TO RELATED APPLICATIONS

This application claims priority to Chinese Patent Application No. 201410193825.X, entitled "PERSONAL VEHICLE DIAGNOSIS SYSTEM AND METHOD BASED ON MOBILE INTELLIGENT TERMINAL" and filed on May 8, 2014, which is hereby incorporated in its entireties by reference.

### TECHNICAL FIELD

The present disclosure relates to a car diagnostic system and method, and particularly to an personal vehicle diagnosis system and method based on a mobile intelligent terminal.

### BACKGROUND

Cars are most familiar and common transportation for people, and they play a very important role in people's daily life. Although cars have different quality and different appearance, it is inevitable that a various of faults will occur in use, and it needs to clear or repair faults in time. With the development of society and technology, electronic technique, automatic technique, and electronic computer technique are used more and more in developing and producing cars. On one side, the degree of automatization of cars becomes higher and higher, performance becomes more excellent, and operation becomes more convenient and flexible, on another side, higher requirements for car's repair and detection are needed.

Car's structure becomes more and more complex, car's fault diagnosis becomes more and more complex, and demand for a car diagnostic device becomes greater and greater. An electronic control unit (ECU) is an important part to monitor and control a car, which generally has a fault self-diagnosis function. When a fault occurs, fault information is stored in the car ECU. Other important information related to the car is also collected and controlled by the car ECU. To examine car faults, it needs to use a protocol supported by the car ECU to achieve communication, to read, process, and display various information of a car, thus achieving the purpose of car diagnosis. Due to variety of car ECU type, variety of protocols supported by the car ECU, and the complexity of the car ECU, it results that the car diagnostic device needs to process complex communication between the car diagnostic device and the ECU, and perform special data process, resulting that special hardware and software are needed to support the car diagnostic device.

Although professional car diagnostic devices for car repair factories have strong functions, their volume are great, and they are expensive. However, individual car diagnostic devices for individual car users develop quickly due to their small volume, low price, and easy operation. Simultaneously, the individual car diagnostic device usually employs a special diagnostic connector in combination with a matched display device of the diagnostic connector. Thus not only it needs to develop hardware for diagnostic connectors, but also it needs to develop hardware for display process and file process, which results in high cost. Furthermore, the individual car diagnostic device is inconvenient to carry around, its application is single, and it is trouble to upgrade software installed therein for lack of network function.

### SUMMARY

The present invention aims to provide a personal vehicle diagnosis system based on a mobile intelligent terminal, to apply car diagnostic technique to the mobile intelligent terminal, and to replace a matched display of a diagnostic connector with the mobile intelligent terminal, to cause the software of the personal vehicle diagnosis system to be easily upgraded and cause the personal vehicle diagnosis system to be easy to carry around, thus cost decreases.

Another purpose of the present invention is to provide a personal vehicle diagnosis method based on a mobile intelligent terminal, which is based on the personal vehicle diagnosis system based on the mobile intelligent terminal. The simple operation facilitates an individual car user to look up car diagnostic data in real time, and determine car status.

To realize above-mentioned purposes, the present invention provides a personal vehicle diagnosis system based on a mobile intelligent terminal. The system includes a mobile intelligent terminal, a diagnostic connector communicating with the mobile intelligent terminal, and a backstage server communicating with the mobile intelligent terminal. The mobile intelligent terminal has a wireless communication function, a network function, and a display function, and has a client software and a car diagnostic application software installed therein. The mobile intelligent terminal is connected to the diagnostic connector via a wireless communication manner. The mobile intelligent terminal communicates with the backstage server via its network function, to realize the update and upgrade of the client software and the car diagnostic application software. The diagnostic connector is connected to a car diagnostic seat, to cause the diagnostic connector to communicate with a car ECU according to a car diagnostic standard protocol.

The mobile intelligent terminal is a smart phone or tablet computer having an Android or IOS operating system.

The wireless communication manner is Bluetooth communication.

The mobile intelligent terminal communicates with the backstage server via GPRS, 3G, 4G, or WIFI.

The diagnostic connector includes a MCU module, a switch module electrically connected to the MCU module, a Bluetooth communication module electrically connected to the MCU module, an LED display module electrically connected to the MCU module and the Bluetooth communication module, a connector module electrically connected to the switch module, and a power supply module electrically connected to the MCU module and the LED display module.

The MCU module is the DP431 digital chip developed by SHENZHEN LAUNCH TECH CO., LTD, and the switch module is the JV700 analog chip developed by SHENZHEN LAUNCH TECH CO., LTD.

The client software includes a number of functions which include a car diagnostic function, an upgrade function, a report function, and other functions.

The car diagnostic application software is suitable for diagnosing an automatic electronic control system, and an interactive interface of the car diagnostic application software includes a number of function options which are respectively version information, read fault code, clear fault code, and read datastream.

Furthermore, the present invention further provides an individual diagnostic method based on a mobile intelligent terminal. The method includes the following steps.

Step 1, providing a mobile intelligent terminal, downloading and installing a client software and a car diagnostic application software from a backstage server via the network function of the mobile intelligent terminal, or updating and upgrading the client software and the car diagnostic application software according to need.

Step 2, providing a diagnostic connector, and connecting the diagnostic connector to a car diagnostic seat.

Step 3, opening Bluetooth function of the mobile intelligent terminal and the diagnostic connector.

Step 4, running the car diagnostic application software, and sending a diagnostic instruction.

Step 5, receiving the diagnostic instruction by the diagnostic connector, communicating the diagnostic connector with a car ECU, reading and receiving diagnostic data, and transmitting the diagnostic data to the mobile intelligent terminal, by the diagnostic connector.

Step 6, looking up the diagnostic data through the display function of the mobile intelligent terminal, and determining car status.

The beneficial effects of the present invention include the following. The personal vehicle diagnosis system and method based on the mobile intelligent terminal provided by the present invention cause the mobile intelligent terminal to have a user interaction function, an interface display function, and a function of controlling communication of the diagnostic connector, by installing the client software and the car diagnostic application software in the mobile intelligent terminal. The mobile intelligent terminal is connected to the diagnostic connector via Bluetooth communication to realize diagnosis of the automatic electronic control system. At the same time the network function of the mobile intelligent terminal is fully utilized to facilitate the update and upgrade of the client software and the car diagnostic application software, to provide individual car users with a diagnostic tool which is more portable, low cost, and easy to operate.

To further learn features and technical content of the present invention, please refer to the detailed illustration of the present invention described in the following and the accompanying drawings. However, the accompanying drawings are just used to provide reference and illustration, and not used to limit the present invention.

### BRIEF DESCRIPTION OF THE DRAWINGS

Illustrated embodiments of the present invention are described in detail in conjunction with the accompanying drawings, to make the technical solution and other beneficial effects of the present invention be apparent.
FIG. 1 is a system architecture diagram of an personal vehicle diagnosis system and method based on a mobile intelligent terminal of the present invention.
FIG. 2 is a hardware logical block diagram of an personal vehicle diagnosis system and method based on a mobile intelligent terminal of the present invention.
FIG. 3 is a schematic view showing functions of a client software applied in an personal vehicle diagnosis system and method based on a mobile intelligent terminal of the present invention.
FIG. 4 is a schematic view showing functions of a car diagnostic application software applied in an personal vehicle diagnosis system and method based on a mobile intelligent terminal of the present invention.
FIG. 5 is a flowchart of a method applied in an personal vehicle diagnosis system and method based on a mobile intelligent terminal of the present invention.

### DETAILED DESCRIPTION OF ILLUSTRATED EMBODIMENTS

To further illustrate technical solution employed by the present invention and effects brought by the technical solution, the following will describe the technical solution and effects in detail in combination with preferred embodiments and the accompanying drawings of the present invention.

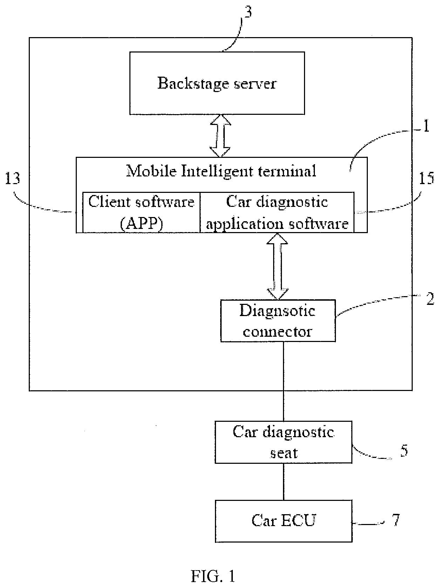

Referring to FIG. 1, the present invention provides a personal vehicle diagnosis system based on a mobile intelligent terminal. The system includes a mobile intelligent terminal 1, a diagnostic connector 2 communicating with the mobile intelligent terminal 1, and a backstage server 3 communicating with the mobile intelligent terminal 1. The mobile intelligent terminal 1 has a wireless communication function, a network function, and a display function. A client software 13 and a car diagnostic application software 15 are installed in the mobile intelligent terminal 1. The mobile intelligent terminal 1 is connected to the diagnostic connector 2 in a wireless communication manner. The mobile intelligent terminal 1 communicates with the backstage server 3 via its network function, to realize update and upgrade of the client software 13 and the car diagnostic application software 15. The diagnostic connector 2 is connected to the car diagnostic seat 5, to cause the diagnostic connector 2 to communicate with a car ECU 7 according to a car diagnostic standard protocol.

Preferably, the mobile intelligent terminal 1 is a smart phone or a tablet computer having an Android or IOS operation system.

The wireless communication manner is Bluetooth communication.

The mobile intelligent terminal 1 communicates with the backstage server 3 via GPRS, 3G, 4G, or WIFI.

The diagnostic seat 5 is an OBDII (the Second On - Board Diagnostics) diagnostic seat.

The mobile intelligent terminal 1 is in charge of user interaction, interface display, and controlling communication of the diagnostic connector 2. The diagnostic connector 2 is in charge of analyzing and processing communication instructions between the mobile intelligent terminal 1 and the car ECU 7. The backstage server 3 is in charge of registering and managing the diagnostic connector 2, and provides the client software 13 and the car diagnostic application software 15 with downloading and upgrade services.

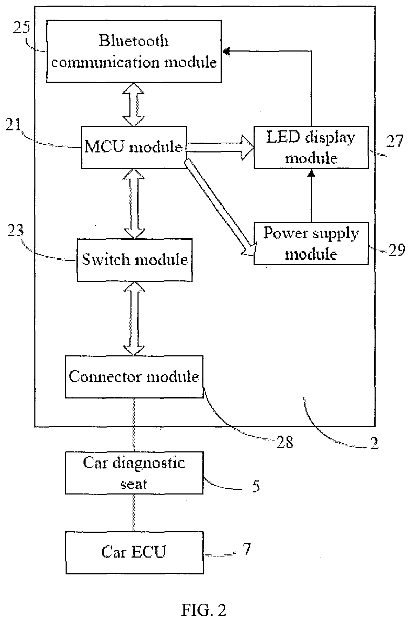

Specifically, referring to FIG. 2, the diagnostic connector 2 includes a MCU (main control) module 21, a switch module 23 electrically connected to the MCU module 21, a Bluetooth communication module 25 electrically connected to the MCU module 21, an LED display module 27 electrically connected to the MCU module 21 and the Bluetooth communication module 25, a connector module 28 electrically connected to the switch module 23, and a power supply module 29 electrically connected to the MCU module 21 and the LED display module 27.

In this embodiment, the MCU module 21 is the DP431 digital chip developed by SHENZHEN LAUNCH TECH CO., LTD, and the switch module 23 is the JV700 analog chip developed by SHENZHEN LAUNCH TECH CO., LTD.

The connector module 28 is connected to the car diagnostic seat 5, to achieve the communication between the connector module 28 and the car ECU 7. The switch module 23 controls the connection and disconnection between the connector module 28 and the car diagnostic seat 5 according to instructions from the MCU module 21, to achieve the reception and transmission of communication data. The MCU module 21 controls the switch module 23, the Bluetooth communication module 25, the LED display module 27, and the power supply module 29, and processes communication data sent to and from the MCU module 21. The Bluetooth communication module 25 achieves the communication connection between the diagnostic connector 2 and the mobile intelligent terminal 1, and also transmits data. The LED display module 27 is used to display Bluetooth connection status and data transmission status. The power supply module 29 is used to provide power.

The MCU module 21 controls the LED display module 27 via general purpose I/O (GPIO) ports. Protocol packets followed by the communication between the MCU module 21 and the switch module 23 include SPI, UART, CAN, SCAN, PMW, and VPW.

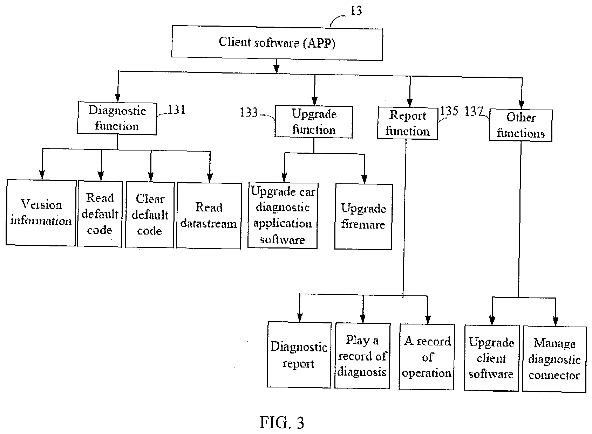

Referring to FIG. 3, the client software 13 includes a number of functions which include a car diagnostic function 131, an upgrade function 133, a report function 135, and other functions 137.

The Bluetooth function of the mobile intelligent terminal 1 is opened to cause the Bluetooth function of the mobile intelligent terminal 1 to be paired with and connected to the Bluetooth communication module 25 of the diagnostic connector 2. When the car diagnostic function 131 is selected, the mobile intelligent terminal 1 transmits a diagnostic instruction to the diagnostic connector 2 via the Bluetooth communication manner. After the MCU module 21 receives the instruction, the MCU module 21 communicates with the switch module 23. The switch module 23 controls the connection and disconnection between the connector module 28 and the car diagnostic seat 5, reads and receives diagnostic data from the car ECU 7. The diagnostic data is then transmitted to the mobile intelligent terminal 1 via the Bluetooth communication manner. The diagnostic data is shown to an individual car user via the display function of the mobile intelligent terminal 1, to realize the diagnosis of the car. The upgrade function 133 is connected to the backstage server via the network function of the mobile intelligent terminal 1, to realize the upgrade of the car diagnostic application software 15 and the firmware (the upgrade of connector software). The report function 135 is used to look up a diagnostic report, a record of datastream, and a record of operation which are generated during diagnostic process. The other functions 137 realize the update of the client software 13 and the registration and management of the diagnostic connector 2.

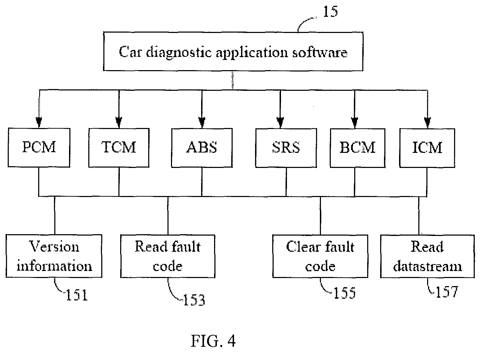

Referring to FIG. 4, the car diagnostic function 131 is realized depending on the car diagnostic application software 15. The car diagnostic application software 15 is not only suitable for detecting and diagnosing a powertrain control module (PCM), but also suitable for detecting and diagnosing a number of other electronic control systems supported by cars, such as an automatic transmission control module (TCM), an anti-lock braking system (ABS), a supplement restrain system (SRS), a body control module (BCM), an ignition control module (ICM), and so on. The interactive interface of the car diagnostic application software 15 includes a number of function options which are respectively version information 151, read fault code 153, clear fault code 155, and read datastream 157. The function of the version information 151 is used to display version information of the car diagnostic application software 15. The function of the read fault code 153 detects the electronic control system supported by the car via the communication between the mobile intelligent terminal 1 and the car ECU 7, and determines whether or not there is a fault in the car using the function of the fault code of the electronic control system. The function of the clear fault code 155 is used to clear temporary faults and repaired faults, to cause the ECU to work normally. The function of the read datastream 157 is used to look up actual data of each sensor of the car.

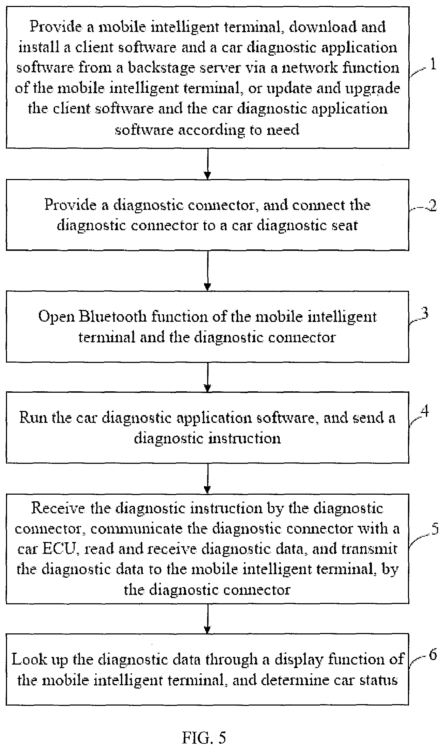

Referring to FIG. 5, furthermore, based on the personal vehicle diagnosis system of the mobile intelligent terminal, the present invention further provides an individual diagnostic method based on the mobile intelligent terminal. The method includes the following steps.

Step 1, providing a mobile intelligent terminal, downloading and installing a client software and a car diagnostic application software from a backstage server via the network function of the mobile intelligent terminal, or updating and upgrading the client software and the car diagnostic application software according to need.

Step 2, providing a diagnostic connector, and connecting the diagnostic connector to the car diagnostic seat.

Step 3, opening Bluetooth function of the mobile intelligent terminal and the diagnostic connector.

Step 4, running the car diagnostic application software, and sending a diagnostic instruction.

Step 5, receiving the diagnostic instruction by the diagnostic connector, communicating the diagnostic connector with a car ECU, reading and receiving diagnostic data, and transmitting the diagnostic data to the mobile intelligent terminal, by the diagnostic connector.

Step 6, looking up the diagnostic data through a display function of the mobile intelligent terminal, and determining car status.

The method is easy to executed, to facilitate an individual car user to look up diagnostic data of the car in real time and determine car status, which effectively enhances safety of driving a car.

As described above, the personal vehicle diagnosis system and method based on the mobile intelligent terminal provided by the present invention cause the mobile intelligent terminal to have a user interaction function, an interface display function, and a function of controlling communication of the diagnostic connector, by installing the client software and the car diagnostic application software in the mobile intelligent terminal. The mobile intelligent terminal is connected to the diagnostic connector via Bluetooth communication to realize diagnosis of an automatic electronic control system. At the same time the network function of the mobile intelligent terminal is fully utilized to facilitate the update and upgrade of the client software and the car diagnostic application software, to provide individual car users with a diagnostic tool which is more portable, low cost, and easy to operate.

For those skilled in the art, they can make various changes and transformations according to the technical solution and technical conception of the present invention, while all of the changes and transformations shall fall within the protection scope of the appended claims of the present invention.

## Claims

1. A personal vehicle diagnosis system based on a mobile intelligent terminal, comprising:
a mobile intelligent terminal (1);
a diagnostic connector (2) communicating with the mobile intelligent terminal (1); and
a backstage server (3) communicating with the mobile intelligent terminal (1);
wherein, the mobile intelligent terminal (1) has a wireless communication function, a network function, and a display function, and has a client software (13) and a car diagnostic application software (15) installed therein; the mobile intelligent terminal (1) is connected to the diagnostic connector (2) via a wireless communication manner; the mobile intelligent terminal (1) communicates with the backstage server (3) via its network function, to realize the update and upgrade of the client software (13) and the car diagnostic application software (15); the diagnostic connector (2) is connected to a car diagnostic seat (5), to cause the diagnostic connector (2) to communicate with a car ECU (7) according to a car diagnostic standard protocol.

2. The personal vehicle diagnosis system based on a mobile intelligent terminal of claim 1, wherein the mobile intelligent terminal (1) is a smart phone or tablet computer having an Android or IOS operating system.

3. The personal vehicle diagnosis system based on a mobile intelligent terminal of claim 1, wherein the wireless communication manner is Bluetooth communication.

4. The personal vehicle diagnosis system based on a mobile intelligent terminal of claim 1, wherein the mobile intelligent terminal (1) communicates with the backstage server (3) via GPRS, 3G, 4G, or WIFI.

5. The personal vehicle diagnosis system based on a mobile intelligent terminal of claim 1, wherein the diagnostic connector (2) comprises a MCU module (21), a switch module (23) electrically connected to the MCU module (21), a Bluetooth communication module (25) electrically connected to the MCU module (21), an LED display module (27) electrically connected to the MCU module (21) and the Bluetooth communication module (25), a connector module (28) electrically connected to the switch module (23), and a power supply module (29) electrically connected to the MCU module (21) and the LED display module (27).

6. The personal vehicle diagnosis system based on a mobile intelligent terminal of claim 1, wherein the client software comprises a number of functions which comprise a car diagnostic function (131), an upgrade function (133), a report function (135), and other functions (137).

7. The personal vehicle diagnosis system based on a mobile intelligent terminal of claim 1, wherein the car diagnostic application software (15) is suitable for diagnosing an automatic electronic control system, and an interactive interface of the car diagnostic application software (15) comprises a number of function options, which are respectively version information (151), read fault code (153), clear fault code (155), and read datastream (157).

8. A personal vehicle diagnosis method based on a mobile intelligent terminal, comprising:
step 1, providing a mobile intelligent terminal, downloading and installing a client software and a car diagnostic application software from a backstage server via a network function of the mobile intelligent terminal, or updating and upgrading the client software and the car diagnostic application software according to need;
step 2, providing a diagnostic connector, and connecting the diagnostic connector to a car diagnostic seat;
step 3, opening Bluetooth function of the mobile intelligent terminal and the diagnostic connector;
step 4, running the car diagnostic application software, and sending a diagnostic instruction;
step 5, receiving the diagnostic instruction by the diagnostic connector, communicating the diagnostic connector with a car ECU, reading and receiving diagnostic data, and transmitting the diagnostic data to the mobile intelligent terminal, by the diagnostic connector;
step 6, looking up the diagnostic data through a display function of the mobile intelligent terminal, and determining car status.
